Europäisches Patentamt

European Patent Office

Office européen des brevets

(11) Publication number: **0 217 123**
**A2**

(12) # EUROPEAN PATENT APPLICATION

(21) Application number: 86111760.4

(51) Int. Cl.⁴: **H04N 9/64**

(22) Date of filing: 25.08.86

(30) Priority: 26.08.85 JP 186904/85

(43) Date of publication of application:
08.04.87 Bulletin 87/15

(84) Designated Contracting States:
DE FR GB

(71) Applicant: **Matsushita Electric Industrial Co., Ltd.**
**1006, Oaza Kadoma**
**Kadoma-shi Osaka-fu, 571(JP)**

(72) Inventor: **Yoshino, Toshihiko**
**2-11, Fushiodai 2-chome**
**Ikeda-City 532(JP)**

(74) Representative: **Kirschner, Klaus Dieter et al**
**Patentanwälte Kirschner & Grosse**
**Herzog-Wilhelm-Strasse 17**
**D-8000 München 2(DE)**

(54) **Multi-standard colour television receiver.**

(57) A multi-standard colour television receiver memorizes television standards corresponding to each channels to be received, and in selecting operation controlls a tuner by the stored channel data and selects the standards, such as colour system, VIF and SIF by the stored codes.

FIG.5

## Multi-standard colour television receiver

### FIELD OF THE INVENTION AND RELATED ART STATEMENT

#### 1. FIELD OF THE INVENTION

The present invention relates to television receivers and more particularly to television receivers which can be adapted for plural television standard.

#### 2. DESCRIPTION OF THE RELATED ART

In the countries, such as europe countries, wherein neighboring countries generally introduce different television standards (such as PAL system and SECAM system), and hence there is a demand for television receiver which can receive not only television standard of home country but also those of other countries. On the other hand, in video tape recorders (VTR) there are many VTR standards corresponding to such television standards.

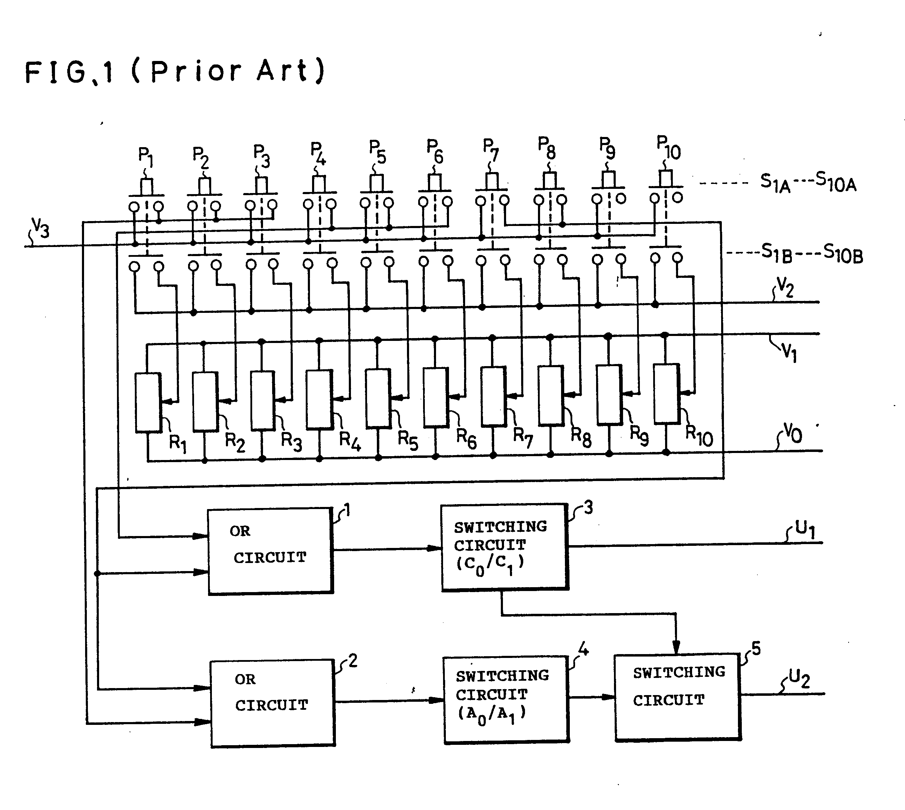

In prior art multi-standard colour television receiver, push block switches are fixed for respective television standard. FIG. 1 shows a switching circuit of the prior art multi-standard colour television receiver. Push block switches $P_1$, $P_2$, $P_3$ .... $P_{10}$ for selecting programme, have contacts $S_{1A}$, $S_{2A}$, $S_{3A}$ .... $S_{10A}$ and contacts $S_{1B}$, $S_{2B}$, $S_{3B}$ .... $S_{10B}$. The push block switches $P_1$ to $P_{10}$ are closed by pushing. Variable resistors $R_1$, $R_2$, $R_3$ .... $R_{10}$ for tuning voltage, is for producing voltage $V_2$ which are selected between a reference voltage $V_0$ and a voltage $V_1$. OR circuits 1 and 2 issue output when supply voltage $V_3$ is applied. A switching circuit 3 switches state of an output U1 from $C_0$ mode to $C_1$ mode by receiving the output from the OR circuit 1. $C_0$ is a state of PAL demodulation mode and $C_1$ is a state of SECAM demodulation mode. A switching circuit 4 switches an output from $A_0$ mode to $A_1$ mode by receiving the output from the OR circuit 2. $A_0$ is 6.5 MHz audio mode and $A_1$ is 5.5 MHz audio mode. Another switching circuit 5 switches the output from the switching circuit 4 from mode of $A_0$ to $A_0'$ only when the output of switching circuit 3 is $C_0$.

Convention switching operation among the West German PAL (Phase Alternation by Line), UK-PAL, French SECAM (sequential a memoire) and Luxemburg SECAM, of the circuit of FIG. 1 is described hereafter. When the push block switch $P_1$ is pushed, the voltage $V_2$ determined by the variable resistor $R_1$, is fed to a tuner (not shown), and the supply voltage $V_3$ is fed to the OR circuit 2. Therefore, the switching circuit 3 selects the $C_0$ mode, i.e. PAL mode, and the switching circuits 4 and 5 select the $A_1$ mode, i.e. 5.5 MHz audio mode. Therefore, the push block switch $P_1$ can select PAL/5.5 MHz mode, i.e. West German PAL mode.

The push block switch $P_4$ selects SECAM/6.5 MHz mode, i.e. French SECAM mode, and the push block switch $P_7$ selects SECAM/5.5 MHz mode, i.e. Luxemburg SECAM mode. When the push block switch $P_9$ is pushed, the voltage $V_2$ determined by the variable resistor $R_9$ is fed to the tuner. Because the supply voltage $V_3$ is not applied to the OR circuits 1 and 2, the switching circuit 3 selects the $C_0$ mode and the switching circuit 4 selects the $A_0$ mode. In this case, the switching circuit convert and $A_0$ mode, i.e. 6.5 MHz audio mode, into 6.0 MHz audio mode. Therefore, the push block switch $P_9$ selects PAL/6.0 MHz mode, i.e. UK-PAL mode.

In such a conventional multi-standard colour television receiver, the receiving modes are fixed to respective push block switches $P_1$ $P_2$ $P_3$ .... $P_{10}$. In this case, the push block switches $P_1$ to $P_3$ are fixed for West German PAL mode, the push block switches $P_4$ to $P_6$ are fixed for French SECAM mode, the push block switches $P_7$ to $P_8$ are fixed for Luxemburg SECAM mode and the push block switches $P_9$ to $P_{10}$ are fixed for UK-PAL mode. Each of push block switches cannot be assigned to any mode.

In other prior art multi-standard colour television receiver, the mode is automatically detected. In such television, however a mode detection circuit is necessary, and thus the television set material cost is high. Further, there is a possibility of erroneous detection especially in poor signal condition.

### OBJECT AND SUMMARY OF THE INVENTION

It is an object of the present invention to provide a multi-standard colour television receiver which can be assigned any mode to each selection switches.

Multi-standard colour television receiver in accordance with the present invention comprises,

pre-setting means for pre-setting desired television standard and generating code signal corresponding to pre-set desired television standard,

memory means for storing the code signal for respective TV channels to be received,

switching means for switching receiving circuit to desired television standard corresponding to the code signal read out from the memory means.

While the novel features of the invention are set forth particularly in the appended claims, the invention, both as to organization and content, will be better understood and appreciated, along with other objects and features thereof, from the following detailed description taken in conjunction with the drawing.

## BRIEF DESCRIPTION OF THE DRAWINGS

FIG.1 is the block diagram of switching circuit of the conventional multi-standard colour television receiver.

FIG.2 is a block diagram of switching circuit of a multi-standard colour television receiver embodying the present invention.

FIG.3 shows a detail of the microprocesser 10 of FIG. 2.

FIG.4 schematically shows an example of recorded information in the memory 11 of FIG.2.

FIG.5 is a block diagram of the multi-standard colour television receiver embodying the present invention.

## DESCRIPTION OF THE PREFERRED EMBODIMENTS

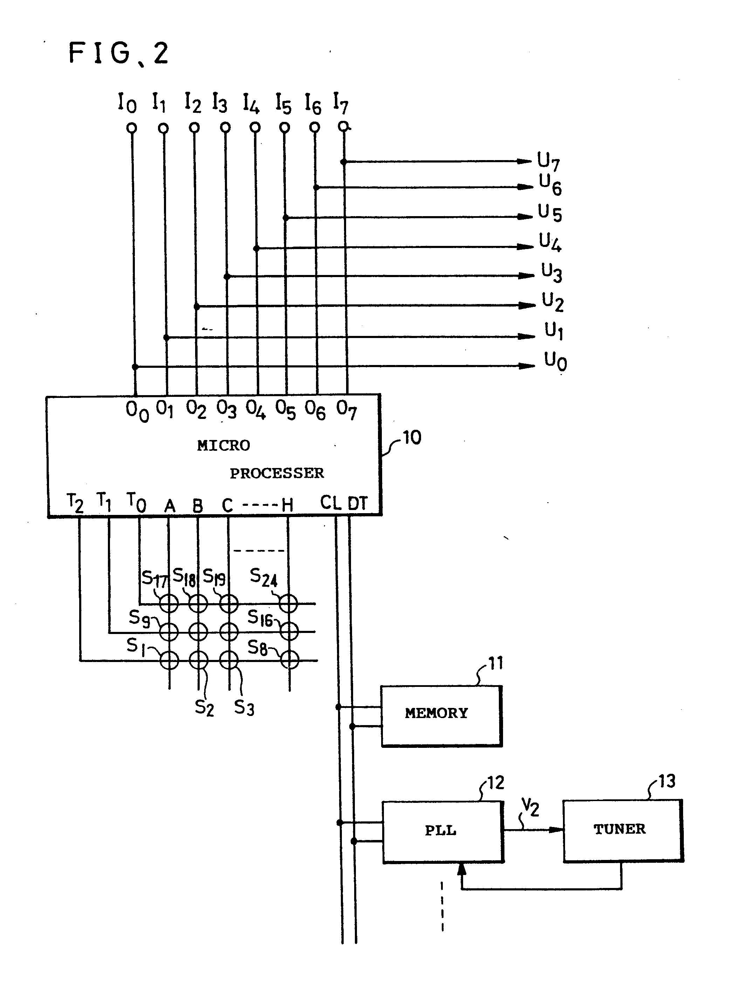

The structure of a preferred embodiment of a multi-standard colour television receiver embodying the present invention is described in detail with reference to FIGs. 2 to 5.

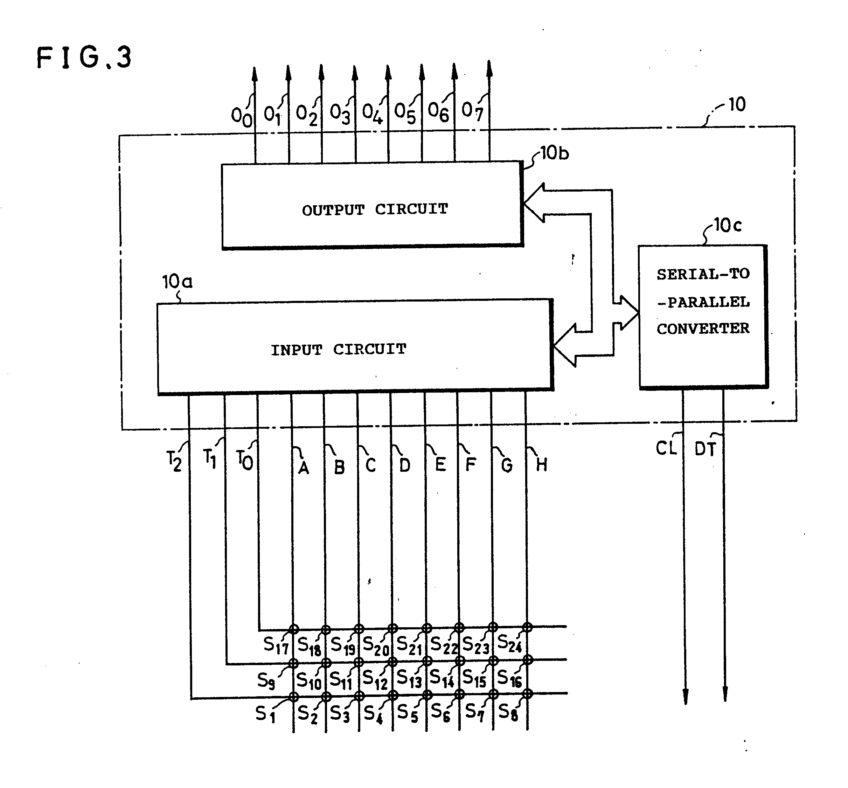

As shown in FIGs. 2 and 3, a microprocesser 10 has input ports $T_0$, $T_1$, and $T_2$ and A, B, C, .... H for key matrix, output ports $0_0$, $0_1$, $0_2$, $0_3$ .... $0_7$, a clock terminal CL, and a data terminal DT.

A switch $S_1$ connected to the ports $T_2$ and A, is assigned for changing colour mode. Originally, both of the ports $0_6$ and $0_7$ output low level voltage - (hereinafter referred to "L") which correspond to PAL 1 mode (West-German-PAL). By pushing the switch $S_1$ once, the output of the port $0_6$ is switched to high level voltage (hereinafter referred to "H") and the output of the port $0_7$ remains "L", which corresponds to SECAM mode. By pushing the switch $S_1$ once again, the output of the port $0_6$ is switched to "L" and the output of the port $0_7$ is switched to "H", which correspond to NTSC mode. By pushing the switch $S_1$ further once again, the output of the port $0_6$ is switched to "H" and the output of the port $0_7$ remains "H", which correspond to PAL 2 mode (UK-PAL).

A switch $S_2$ connected to the port $T_2$ and B, is assigned for changing Video Intermediate Frequency (VIF). Originally, the port $0_5$ output "L", which correspond to first mode VIF. By pushing the switch $S_2$ once, the output of the port $0_5$ is switched to "H", which correspond to second mode VIF.

A switch $S_3$ connected to the port $T_2$ and C, is assigned for changing Sound Intermediate Frequency (SIF). By pushing the switch $S_3$, the outputs of the ports $0_3$ and $0_4$ change as the ports $0_6$ and $0_7$ described above. Therefore, the switch $S_3$ selects SIF between a first mode SIF to a fourth mode SIF.

A switch $S_4$ connected to the port $T_2$ and $D_1$, is assigned for changing sound modulation mode. The switch $S_4$ selects the FM (frequency modulation) or AM (amplitude modulation) by changing the output of the port $0_2$.

A switch $S_5$ connected to the ports $T_2$ and E, is assigned for changing modulation polarity to plus or minus. The switch $S_5$ selects the plus polarity or the minus polarity by changing the output of the port $0_1$.

Switches $S_6$ and $S_7$ are assigned for channel selecting. By pushing the switch $S_6$, the receiving programme number is increased and by pushing the switch $S_7$, the receiving programme number is reduced.

A switch $S_{17}$ is assigned for storing the selected mode information to a memory 11.

Other switches $S_8$ to $S_{16}$ and $S_{18}$ to $S_{24}$ are respectively assigned for selecting other function, such as sound volume, picture contrast or colour.

The status of each ports $0_0$ to $0_7$ are indicated by lamps $I_0$, $I_1$, $I_2$, $I_3$ .... $I_7$ (or LED etc.).

In other embodiment, four lamps are provided for indicating the four statuses of the output of ports $0_6$ and $0_7$. In such case, a decoder is connected to the ports $0_6$ and $0_7$.

A recording operation of the circuit of the FIGs.2 and 3 is described hereafter. First, a desired channel number is selected by pushing the switch 6. Then, by pushing the switch $S_1$, the port $T_2$ connects to the port A, and then an output circuit 10b makes "H" level of port $0_1$. The output of port $0_2$ remains "L" level. The "H" level of port $0_1$ lights the indicator $I_1$ and makes "H" level of the signal $U_1$. Then, by pushing other switches, desired selection is made. Serial data which is converted by a serial-to-parallel converter 10c corresponding to the output of the output ports $0_0$ to $0_7$, is transferred to the memory 11 through the data line DT. Then by pushing the switch 17, the transferred data and channel number data are stored in the memory 11.

For receiving desired channel, the channel number data is read from the memory 11 on the data line DT and transferred to PLL (Phase Locked Loop) 12. PLL 12 generates a tuning voltage $V_2$ corresponding to desired channel number and gives it to the tuner 13. Divided output from the tuner 13 is fed to PLL 12 for adjusting the tuning frequency to desired frequency. On the other hand, the stored data corresponding to the output of the ports $0_1$ to $0_7$ is read from the memory 11 on the data line DT and transferred to the microprocesser 10. The microprocesser 10 changes the set levels of the output ports $0_0$ to $0_7$ upon receiving the data. Therefore, the memorized mode presented again.

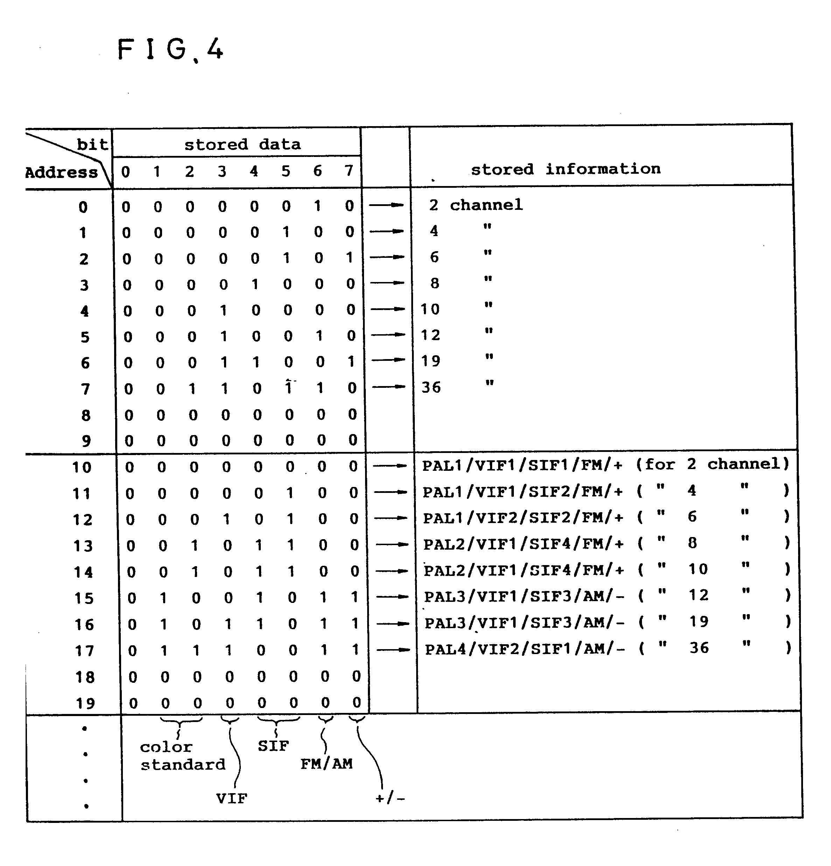

FIG.4 shows an example of recorded information in the memory 11. Usually, the memory 11 having memory capacity of about 128 X 8 bit is used. Addresses 0 to 9 are assigned for storing the channel numbers. Each of addresses 0 to 9 consists of 8 bit and stores the channel number by means of binary-coded decimal notation. Addresses 10 to 19 are assigned for storing the receiving mode for the channel number stored in the addresses 0 to 9. Each of addresses 10 to 19 consists of 8 bit and stores the colour mode (2 bit), VIF (1 bit), SIF (2 bit), modulation mode (1 bit) and video modulation polarity (1 bit). When the programme 1 is selected, the addresses 0 and 10 are accessed. Then the data stored in the addresses 0 and 10 are read on the data line DT.

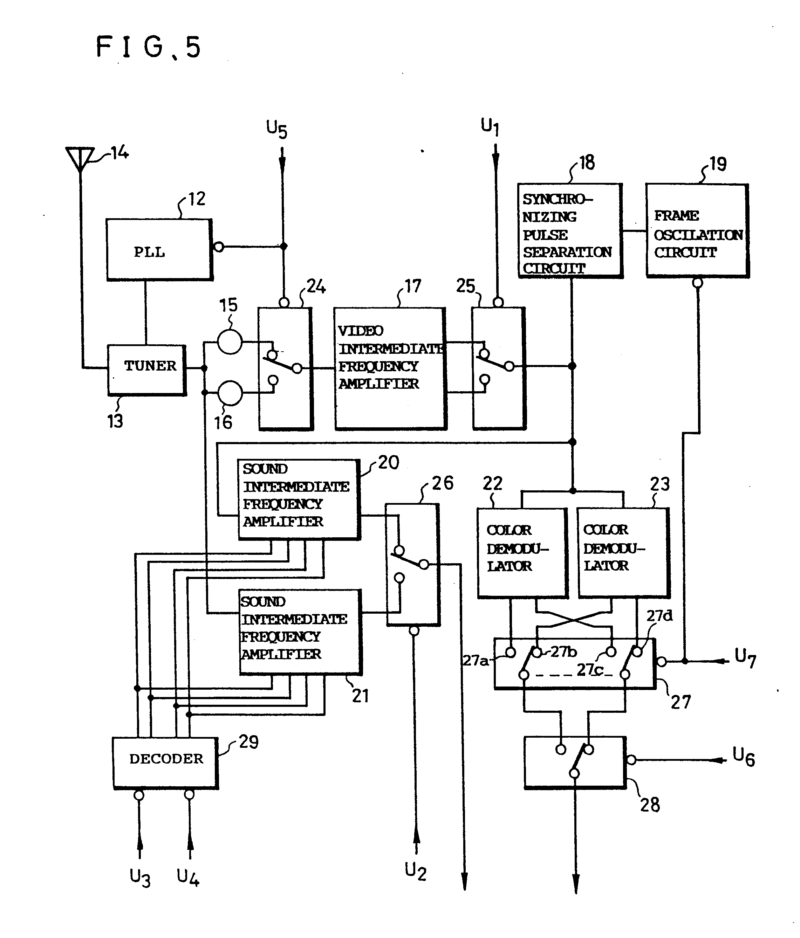

FIG.5 shows a block diagram of the multi-standard colour television receiver wherein its receiving mode is changed by the signals $U_0$ to $U_7$ from the circuit of FIGs.2 and 3. High frequency signal received by an aerial 14 is applied to a tuner 13. The tuner 13 converts the received high frequency signal into intermediate frequency signal and the intermediate frequency signal is applied to a filter 15 or 16. The filter 15 or 16 is selected by the switch 24 controlled by the signal $U_5$. The filters 15 and 16 are provided for adapting the intermediate frequency signal to the receiving mode. At the same time, the signal $U_5$ controll the PLL 12 for changing the intermediate frequency, if necessary. When it is not necessary to change the intermediate frequency, only one filter 15 or 16 is sufficient. In this case, the oscillation frequency of PLL 12 should be changed for making constant intermediate frequency. The intermediate frequency signal is fed to VIF amplifier 17. The polarity switch 25 connected to VIF amplifier 17 is for switching the polarity. The amplified intermediate frequency signal is fed to a synchronizing pulse separation circuit 18, a sound intermediate frequency amplifier 20 and a colour demodulator.

The SIF amplifier 20, which is for inter-carrier receiving system, selects one from four sound intermediate frequencies (for example 4.5 MHz, 5.5 MHz, 6.0 MHz and 6.5 MHz) in compliance with output from a decoder 29. The SIF amplifier 21, which is for amplitude modulation to which the output signal from the tuner 13 is applied, selects one from four AM sound intermediate frequencies in compliance with output from the decoder 29. The decoder 29 is controlled by the signals $U_3$ and $U_4$. A switch 26 controlled by the signal $U_2$, selects the SIF amplifier 20 or 21, that is, it switches FM mode or AM mode. The output from the SIF amplifier 20 or 21 is fed to a sound circuit (not shown).

The colour signal from the VIF amplifier 17 is fed to a colour demodulators 22, 23 and the output of colour demodulators 22 and 23 are connected to a switch 27 controlled by the signal $U_7$. When the switch 27 selects contacts 27b and 27d, the switch 27 outputs PAL1 mode and SECAM mode signal. The PAL 1 mode and SECAM mode signals are selected by a switch 28 controlled by the signal $U_6$. When the switch 27 selects contacts 27a and 27c, the switch 27 outputs NTSC mode and PAL 2 mode. The NTSC mode and PAL 2 mode signals are selected by a switch 28 controlled by the signal $U_6$.

At the same time, the signal $U_7$ is fed to the frame oscillation circuit 19 and selects the oscillation frequency (50 Hz or 60 Hz) of the oscillator 19. In this case, combination of 60 Hz frame freq./3.58 colour and 50 Hz frame freq./4.43 colour can be switched, but another combination can be made preparing independent 50 Hz/60 Hz identification bit (by using $0_0$ port for example). The oscillation frequency of 60 Hz is used for colour subcarrier of 3.58 MHz and an oscillation frequency of 50 Hz is used for colour subcarrier of 4.43 MHz.

In other embodiment, the switchings, which can be automatically and certainly detected, are carried out by automatic detection circuits.

As has been described in detail for various embodiments, the multi-standard colour television receiver in accordance with the present invention can be assigned for any mode with respect to each selecting switches and operates without undesirable erroneous detection. Further, the circuit can be made simple, as a result of introducing digital circuits.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

**Claims**

1. A multi-standard colour television receiver comprising:

pre-setting means for pre-setting desired television standard and generating code signal corresponding to pre-set desired television standard,

memory means for storing the code signal for respective television channels to be received,

switching means for switching receiving circuit to desired television standard corresponding to the code signal read out from the memory means.

2. A multi-standard colour television receiver in accordance with Claim 1, wherein

the pre-setting means comprises,

microprocesser having key-matrix input ports for changing its output ports for indicating the television standard.

3. A multi-standard colour television receiver in accordance with Claim 1, wherein

the memory means stores coded information for channel selecting.

4. A multi-standard colour television receiver in accordance with Claim 1, wherein

the memory means comprises a non-volatile storage.

FIG.1 (Prior Art)

# FIG.2

FIG.3

0 217 123

# FIG.4

| Address \ bit | stored data | | | | | | | | | | stored information |
|---|---|---|---|---|---|---|---|---|---|---|---|
| | 0 | 1 | 2 | 3 | 4 | 5 | 6 | 7 | | | |
| 0 | 0 | 0 | 0 | 0 | 0 | 0 | 1 | 0 | → | 2 channel |
| 1 | 0 | 0 | 0 | 0 | 0 | 1 | 0 | 0 | → | 4 " |
| 2 | 0 | 0 | 0 | 0 | 0 | 1 | 0 | 1 | → | 6 " |
| 3 | 0 | 0 | 0 | 0 | 1 | 0 | 0 | 0 | → | 8 " |
| 4 | 0 | 0 | 0 | 1 | 0 | 0 | 0 | 0 | → | 10 " |
| 5 | 0 | 0 | 0 | 1 | 0 | 0 | 1 | 0 | → | 12 " |
| 6 | 0 | 0 | 0 | 1 | 1 | 0 | 0 | 1 | → | 19 " |
| 7 | 0 | 0 | 1 | 1 | 0 | 1 | 1 | 0 | → | 36 " |
| 8 | 0 | 0 | 0 | 0 | 0 | 0 | 0 | 0 | | |
| 9 | 0 | 0 | 0 | 0 | 0 | 0 | 0 | 0 | | |
| 10 | 0 | 0 | 0 | 0 | 0 | 0 | 0 | 0 | → | PAL1/VIF1/SIF1/FM/+ (for 2 channel) |
| 11 | 0 | 0 | 0 | 0 | 0 | 1 | 0 | 0 | → | PAL1/VIF1/SIF2/FM/+ ( " 4 " ) |
| 12 | 0 | 0 | 0 | 1 | 0 | 1 | 0 | 0 | → | PAL1/VIF2/SIF2/FM/+ ( " 6 " ) |
| 13 | 0 | 0 | 1 | 0 | 1 | 1 | 0 | 0 | → | PAL2/VIF1/SIF4/FM/+ ( " 8 " ) |
| 14 | 0 | 0 | 1 | 0 | 1 | 1 | 0 | 0 | → | PAL2/VIF1/SIF4/FM/+ ( " 10 " ) |
| 15 | 0 | 1 | 0 | 0 | 1 | 0 | 1 | 1 | → | PAL3/VIF1/SIF3/AM/− ( " 12 " ) |
| 16 | 0 | 1 | 0 | 1 | 1 | 0 | 1 | 1 | → | PAL3/VIF1/SIF3/AM/− ( " 19 " ) |
| 17 | 0 | 1 | 1 | 1 | 0 | 0 | 1 | 1 | → | PAL4/VIF2/SIF1/AM/− ( " 36 " ) |
| 18 | 0 | 0 | 0 | 0 | 0 | 0 | 0 | 0 | | |
| 19 | 0 | 0 | 0 | 0 | 0 | 0 | 0 | 0 | | |
| ⋮ | | | | | | | | | | |

color standard    VIF    SIF    FM/AM    +/−

F I G . 5